# EUROPEAN PATENT SPECIFICATION

(11) **EP 3 862 624 B1**
(45) Date of publication and mention of the grant of the patent: **21.12.2022**
(21) Application number: 21155631.1
(22) Date of filing: 05.02.2021
(51) Int. Cl.: F21S 41/24, F21S 41/32, F21S 41/147, F21S 41/151, F21S 43/239, F21S 43/245, F21S 43/249, F21S 43/31, F21S 43/14, F21S 43/15

(54) **LIGHTING DEVICE FOR VEHICLES, IN PARTICULAR WITH LEDS**
BELEUCHTUNGSEINRICHTUNG FÜR FAHRZEUGE, INSBESONDERE MIT LEDS
DISPOSITIF D'ÉCLAIRAGE POUR VÉHICULES, EN PARTICULIER AVEC DES DEL

(30) Priority: 06.02.2020 IT 202000002350
(43) Date of publication of application: 11.08.2021
(73) Proprietor: Marelli Automotive Lighting Italy S.p.A. Con Socio Unico, 10078 Venaria Reale (TO) (IT)
(72) Inventor: VAIRA, Alessandro, 10078 VENARIA REALE (TO) (IT); CLERICI, Francesca, 10078 VENARIA REALE (TO) (IT); PALMIERI, Stefano, 10078 VENARIA REALE (TO) (IT)
(74) Representative: Plebani, Rinaldo

(56) References cited:
- EP-A1- 2 317 214
- EP-A1- 3 480 514
- WO-A1-2015/075668
- DE-A1-102010 046 022
- FR-A1- 2 966 223
- US-B1- 10 288 248

## Description

### Cross-reference to related applications

This Patent Application claims priority from Italian Patent Application No. 102020000002350 filed on February 6, 2020.

### Technical background of the invention

This invention relates to a lighting device for vehicles, in particular a headlight for a vehicle, such as a car, wherein the light source comprises a LED or LED battery.

### Prior art

As is well known, a headlight or lamp of a vehicle, in particular of a car, comprises a cup-shaped housing that houses at least one light source, and a transparent element arranged to close a front opening of the cup-shaped housing. Inside the housing, optical systems are also arranged to orient and shape a light beam emitted by the light source, according to a pre-set photometric profile. The simplest of these optical systems consists of one or more reflectors, possibly assisted by one or more lenses or prisms formed on the transparent element or housed (in the case of lenses) inside the cup-shaped housing.

If the light source consists of a LED, or of a LED battery so as to generate the necessary light output, the LEDs are placed very close to the lenses or, where this is not possible, the light beam emitted by the LED source is routed into a light guide that transfers it to the intended emission area.

However, the current optical systems based on light guides have the drawback of producing a light distribution that is not always regular or uniform and, in any case, is not suitable, or not very suitable, to producing the photometric profiles required for vehicle headlights.

Therefore, current light-guide-based optical systems are used almost exclusively for rear lamps or, at most, as front DRLs.

This is the case with DE102010046022A where the light guide section arranged between the light source and the collimating structure does not function as a collimating element, but guides the light without any conformation or control.

FR2966223A1 discloses a light guide structure that can be used exclusively for signalling functions and is designed to alternatively use two different light sources and wherein the collimating element receives light rays by reflection.

US10288248B1 discloses a lighting device having a light-guide that is solely for producing adaptable spot lights and moreover uses a complicated and expensive configuration based on aspherical surfaces.

### Summary of the invention

One purpose of this invention is to provide a lighting device for vehicles, in particular a headlight for a vehicle, such as a car, wherein the light source comprises at least one LED or LED battery and that is free from the drawbacks of the state of the art, in particular, that it can provide high uniformity and homogeneity of illumination and a photometric profile suitable for a vehicle headlight, together with high compactness, thus having a reduced bulk, relatively low manufacturing and assembly costs and high adaptability of shape, so that vehicles with even very different stylistic profiles can be equipped with it, but by operating according to a single operating principle.

Accordingly, this invention relates to a vehicle lighting device, in particular a headlight for a vehicle, such as a car, which has the features set forth in the appended claims.

The vehicle lighting device according to the invention preferably, but not exclusively, consists of a vehicle headlight comprising: a cup-shaped housing that houses at least one light source; a transparent element arranged to close a front opening of the cup-shaped housing; and an optical system also housed within the cup-shaped housing. The latter is configured to collect at least one first light beam generated by the light source and to project a second light beam, in a pre-set direction, that has a pre-set photometric profile. The light source comprises at least one LED or LED battery and the optical system comprises a light guide consisting of a flat band bounded between a front and a rear face thereof, which are substantially flat and have a first and a second end that are opposite to each other.

The first end is configured to collect the at least one first light beam generated by the at least one LED or LED battery.

The first end of the light guide is provided, on the side opposite the second end, with a transverse edge shaped so as to define at least one first collimating element, for example formed by a concave or convex lens, arranged facing the at least one LED or LED battery and configured to collect within the light guide the at least one first light beam and perform a first collimation thereof towards the second end of the light guide.

In combination, the first end of the light guide is provided - towards the second end and on the side opposite the transverse edge - with at least one second collimating element facing to, and operationally associated with, the at least one first collimating element and configured to collect the first light beam after the first collimation and to perform a second collimation of the first light beam, generating downstream of the at least one second collimating element, and towards the second end, the second light beam already within the light guide. The second light beam already has, within the flat band constituting the light guide, the photometric profile, and any shape or aesthetic aspect desired, and is uniformly distributed over the entire height of the flat band constituting the same and measured between an upper longitudinal edge and a lower longitudinal edge of the flat band.

The light guide also has a first intermediate section arranged between the first and second ends and delimited between two opposite convergent portions of the front and rear faces, so that the first intermediate section has a thickness, measured perpendicularly to the first and second faces, which progressively reduces towards the second end.

The light guide extends downstream of the first intermediate section, wherein the term "downstream" refers to a trajectory of the at least one first light beam within the light guide, and towards the second end, with a cross section that has a constant thickness measured perpendicularly to the front and rear faces.

The opposite convergent portions of the front and rear faces which delimit the first intermediate section continuously connect to the rest of the front and rear faces and preferably have a continuous, straight, or curved profile.

In addition, the light guide preferably comprises, in addition to the first intermediate section with converging faces, a second intermediate section arranged downstream of the first intermediate section, the term "downstream" referring to the trajectory of the at least one first light beam within the light guide.

The second intermediate section is also arranged on the side of the second end and connects the second end with the first intermediate section.

The second intermediate section has a constant thickness measured perpendicularly to the front and rear faces and, at least in part, continuously defines a curve in the light guide, so that the first end with the first intermediate section are aligned with each other and arranged at an angle to the second end, with which they continuously connect through the second intermediate section.

The second intermediate section is, preferably but not necessarily, provided at least partially with a plurality of grooves or scratches or ribs made on one or both of the front and rear faces and oriented perpendicularly to the upper and lower longitudinal edges of the flat band constituting the light guide.

The grooves or scratches or ribs are straight and have, preferably but not necessarily, a cylindrical profile and are preferably formed only upstream of a curved portion of the second intermediate section, on the side of the first intermediate section.

The first end of the light guide is provided, on the side opposite to the second end, with the at least one second collimating element, which is made at a transverse through opening, formed perpendicularly to the front and rear faces and through the flat band constituting the light guide.

The at least one second collimating element is, accordingly, defined by at least one of the opposite transverse edges of the through opening extending between the upper and lower longitudinal edges of the flat band.

In one embodiment, the at least one second collimating element faces the second end, being formed on a transverse edge of the through opening, which edge is arranged towards the transverse edge of the first end of the light guide bearing the at least one first collimating element.

According to one aspect of the invention, there are one or more, for example two or three, of each of the first and second collimating elements, aligned side by side in the height direction of the flat band, i.e. in the space between the upper and lower edge thereof. In addition, they are configured to determine, at least in part, an aesthetic appearance of an emission section of the second light beam present on the front face of the flat band constituting the light guide.

In fact, the second end of the light guide is provided with light extracting elements on the rear face of the flat band, for example with prisms or other suitable types of optics, configured to deflect the second light beam from within the flat band constituting the light guide through the emission section defined on the front face of the flat band.

The uniformity of the intensity and of the other photometric characteristics of the second light beam, as well as the bright aesthetic appearance of the lighting device as a whole, which is also defined by the shape that the emission section located on the front face of the flat band assumes in use when the LEDs are switched on, are obtained, according to the invention, already inside the light guide thanks to the pair/pairs of collimating elements facing each other and operatively associated.

An additional and greater uniformity of illumination, i.e. a greater homogeneity of the second light beam being emitted by the lighting device according to the invention can be obtained thanks to the additional arrangements according to the invention described above. These can be used in part or all together and consist of the converging faces of the first intermediate section and of the curve formed by the second intermediate section and by the above-mentioned grooves or scratches or ribs, which define, as well as the curved portion of the second intermediate section, lenses or obstacles bouncing the light between the front and rear faces of the light-guide until it is guided into the second end of the light-guide. The latter delimits the emission section of the light-guide, which is configured to emit the second light beam, on the side of the front face, now having a pre-set photometric profile and bright appearance perpendicularly to the front face, due to the presence, on the second end of the light guide, on the side of its rear face, of the light extracting elements, for example prisms, which are configured to deflect the second light beam, formed within the light guide, through the emission section of the front face.

Such a result could not be achieved, at least not to the extent made possible by this invention, with the light guides known in the art, in which there are only one or more collimating elements all arranged in alignment with each other, side by side, at the light source, and not arranged in tandem pairs as in this invention.

In fact, in known light guides, the light beam being emitted by the LEDs is collimated, but remains more intense towards the centre, so that the light emitted by the prisms is not homogenous, thus providing a non-uniform light beam exiting the lighting device.

### Brief Description of the Drawings

Additional features and advantages of this invention will be more evident from the following description of a non-limiting embodiment thereof, which is drawn up with reference to the figures in the appended drawings, wherein:
- Figure 1 schematically illustrates a front, three-quarter perspective view of a vehicle lighting device, in particular a headlight, made according to the invention;
- Figure 2 schematically illustrates, on an enlarged scale, a front, three-quarter perspective view of an optical system that equips the lighting device in Figure 1;
- Figure 3 schematically illustrates, on an additionally enlarged scale, a three-quarter, back perspective view of an optical system as in Figure 2 but rotated 90°, so as to present upwards a back face thereof, and modified according to a different embodiment; and
- Figures 4 and 5 schematically illustrate, on an even larger scale, two details of the optical system in Figure 3.

### Detailed description

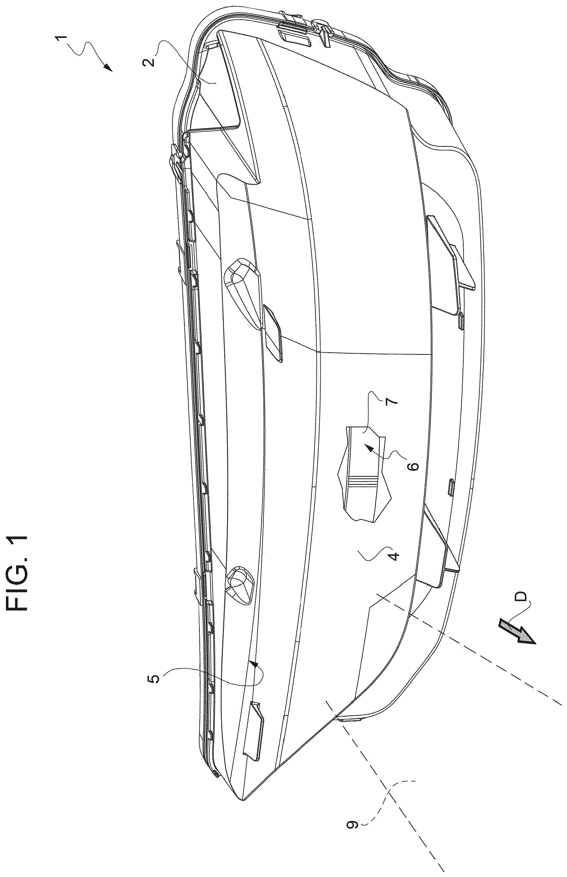

With reference to Figure 1, the reference number 1 indicates, as a whole, a vehicle lighting device, in the non-limiting embodiment illustrated herein consisting of a vehicle headlight.

It is understood that the invention is not limited to a vehicle headlight, but also extends to a lamp, front or rear, although in the following description reference will be made, for simplicity, to a vehicle headlight.

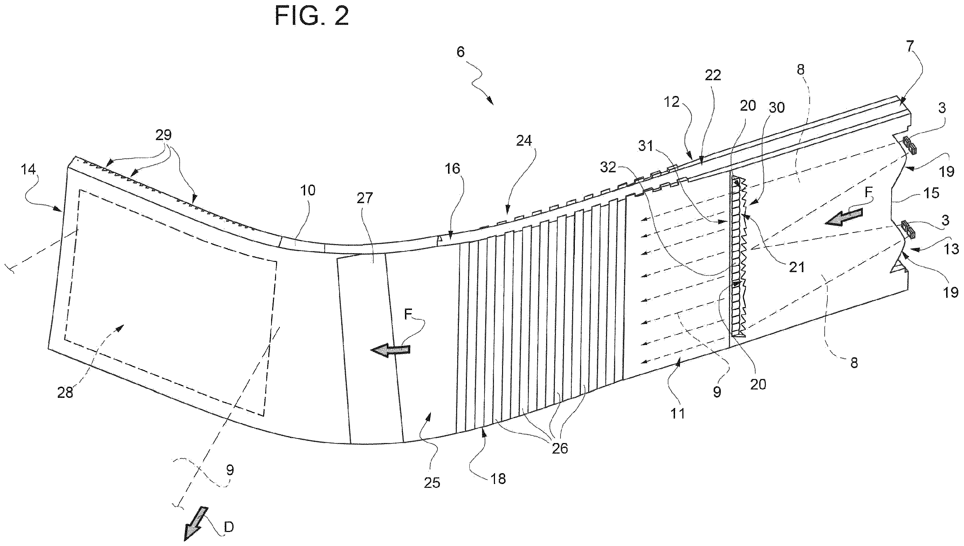

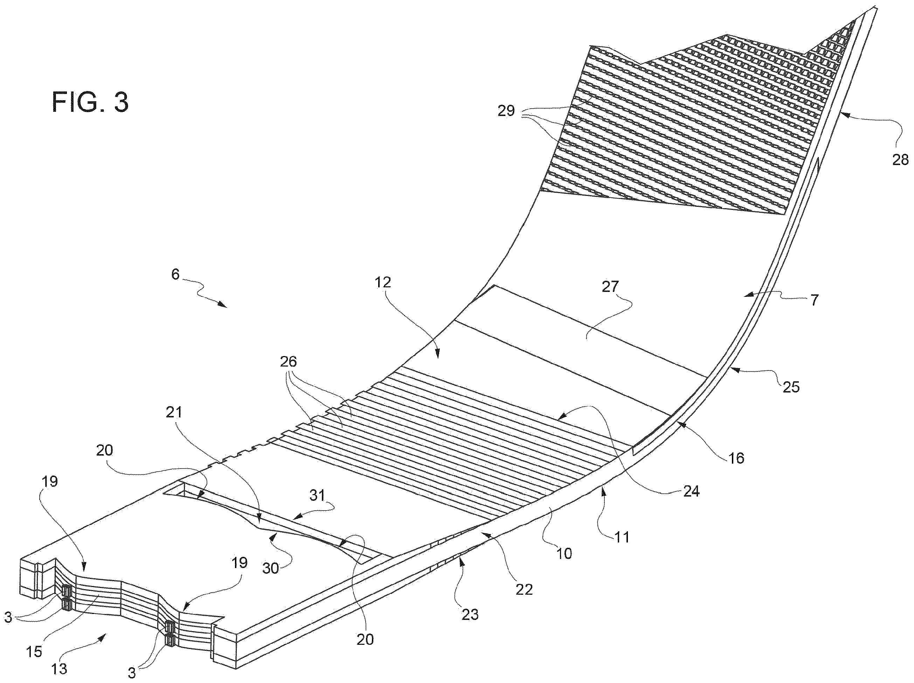

The lighting device 1 comprises: a cup-shaped housing 2 that houses, in a known way, at least one light source consisting (Figure 2) of at least one LED 3 or LED battery 3 (in the illustrated, non-limiting example consisting of two pairs of LEDs 3 - Figure 3); a transparent element 4 arranged to close a front opening 5 of the cup-shaped housing 2; and an optical system 6, also housed within the cup-shaped housing 2, opposite the transparent element 4. The optical system comprises a light guide 7 configured to collect at least one first light beam 8 (Figure 2) generated by the light source defined by the LEDs 3 and to project a second light beam 9, which has a pre-set photometric profile, in a pre-set direction D (indicated by the arrow in Figures 1 and 2) and through the transparent element 4.

According to one aspect of the invention, the light guide 7 consists of a flat profiled band 10 that has a substantially rectangular cross-section and, substantially, the shape of an elongated parallelepiped which, in the preferred embodiment thereof as illustrated it is curved. The band 10 is preferably moulded in a transparent, synthetic plastic material and bounded between a front 11 and a rear 12 face thereof, which are substantially flat and parallel to each other, except, as it will be seen, along an intermediate section of the transparent band 10.

The flat, transparent band 10 constituting the light guide 7 has a first end 13 and a second end 14 that are opposite to each other (Figure 2).

With reference also to the other Figures 3 to 5, the first end 13 is configured to collect the at least one first light beam 8 (in this case, the individual light beams 8 generated by the LEDs 3) generated by the at least one LED 3 or LED battery 3 to convey it/them within the light guide 7, in which they mix, as will be seen, and undergo a series of total reflections against the faces 11 and 12, on the inner side thereof, and within the light guide 7, moving along the latter from the end 13 and in the direction of the other end 14, according to a trajectory F (indicated by the arrows in Figure 2) following, i.e. parallel to, a longitudinal profile of the flat band 10, delimited by the faces 11 and 12.

For this purpose, the first end 13 of the light guide 7 is provided, on the side opposite the second end 14, with a transverse edge 15, arranged substantially perpendicular to the faces 11,12 and substantially perpendicular to respective upper 16 and lower longitudinal edges 18 of the transparent flat band 10 or light guide 7.

The edge 15 is shaped so as to define at least one first collimating element 19, in this case a pair of collimating elements 19 each arranged facing a pair of LEDs 3 side by side (Figure 3) and consisting, in the illustrated non-limiting example, in respective lenses.

Here and in the following, "collimating element" is to be understood as an optical element not only capable of collecting light and distributing it, but also capable of performing such light distribution in a controlled manner, shaping the individual light rays into a beam of a pre-set shape and intensity, i.e. creating a light beam (in this case, within the light guide 7) that is collimated.

The lenses 19 constituting the first collimating elements may be either concave or convex (the two lenses 19 are both convex in the non-limiting example illustrated, but other configurations are possible).

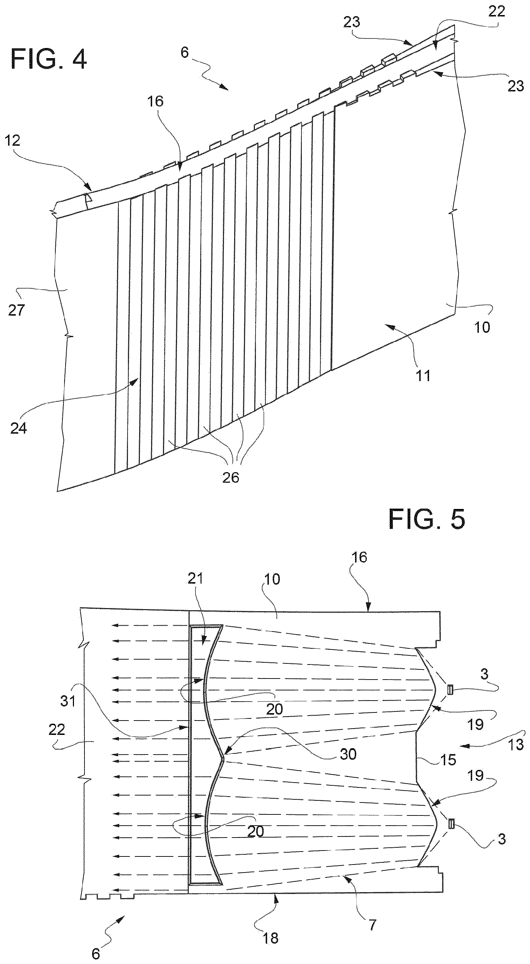

In any case, each lens or collimating element 19 is arranged to face the at least one LED 3 or LED battery 3 and is configured to collect within the light guide 7 each first light beam 8 emitted by the LEDs 3 and perform a first collimation on the same (Figure 5).

In addition, the first end 13 of the light guide 7 is provided towards the second end 14 and on the side opposite the transverse edge 15, with at least one second collimating element 20, in this case two collimating elements 20 of a known type, each arranged facing a pair of LEDs 3 with the interposition of the pair of lenses 19.

The collimating elements 20 are therefore arranged in tandem in the direction F in relation to the corresponding collimating elements 19.

This at least one second collimating element 20, i.e., the pair of side-by-side collimating elements 20, is/are oriented parallel to the front and rear faces 11,12 and perpendicularly to the upper and lower longitudinal edges 16,18.

Each second collimating element 20 is in fact bounded by one of two opposing perimeter and radially internal transverse edges 30 and 31 of the transverse through opening 21 formed perpendicularly to the faces 11,12 and through the light guide 7.

The at least one second collimating element 20, in the illustrated example the pair alongside the collimating elements 20, is configured to collect the first light beam 8 after the first collimation and to perform a second collimation of the first light beam 8, generating - downstream of the at least one second collimating element 20 and towards the second end 14 - the second light beam 9 with a pre-set photometric profile already inside the light guide 7 and uniformly distributed over the entire height of the flat band 10 constituting the same and measured between the upper 16 and lower 18 longitudinal edge of the flat band, perpendicularly to these (Figure 5).

The edges 30,31 of the through opening 21 are parallel to each other and with the transverse edge 15 of the end 13 and extend between the upper and lower longitudinal edges 16,18 of the flat band 10 constituting the light guide 7, perpendicularly to the same in the illustrated example.

In the illustrated, non-limiting example, a single through opening or window 21 drilled transversely through the transparent band 10 constituting the light guide 7 bounds and shapes the pair of second collimating elements 20.

According to one aspect of the invention, the second collimating elements 20, as already mentioned, are paired, i.e., operationally associated, to the first collimating elements 19 formed on the transverse edge 15, so as to contribute to the collimation of the light beam 8 that undergoes a second collimation generating the second light beam 9, which has the desired photometric characteristics, downstream of the elements, in relation to the direction F, and already inside the light guide 7. The second collimating elements also increase the uniformity of the second light beam that can be obtained with just the first collimating elements 19, as pictorially illustrated in dashed lines, even if only schematically and without any pretension of verisimilitude, in Figure 5.

According to the invention, the light guide 7 also has, between the first 13 and the second 14 end a first intermediate section 22 arranged downstream of the at least one second collimating element 20 with respect to the trajectory F of the at least one first light beam 8.

The first intermediate section is bounded between two opposite convergent portions 23 of the front and rear faces 11 and 12, so that the first intermediate section 22 has a thickness, measured perpendicularly to the first and second faces 11 and 12, which progressively reduces towards the second end 14, but a constant height measured perpendicularly to the upper and lower longitudinal edges 16,18.

This expedient has been experimentally shown to be useful for improving, in case of need (for example with LED batteries 3 widely spaced apart), the uniformity and homogeneity of the light beam 9 being emitted, as it increases and intersects the internal reflections of the light generated by the LEDs 3 and that runs along the light guide 7 in the direction F.

The light guide 7 extends, moreover, both downstream, towards the second end 14, and upstream in the illustrated non-limiting example, of the first intermediate section 22 in relation to the trajectory F defined by the at least one first light beam 8 and defined by the shape of the light guide 7, with a cross-section that has a constant thickness measured perpendicularly to the front and rear faces 11 and 12, which are therefore always parallel to each other with the exception of the section of the light guide 7 consisting of the intermediate section 22.

The opposite convergent portions 23 of the front and rear faces 11,12 delimiting the first intermediate section 22 are continuously connected to the rest of the front and rear faces 11,12 and have a continuous, straight profile (in the illustrated example), or a curved one, for example defined by a parabola, hyperbola, or complex curve section.

According to a preferred aspect of the invention, the light guide 7 also comprises a second intermediate section 24 arranged downstream of the first intermediate section 22 in relation to the trajectory of the light beams 8 and on the side of the second end 14.

The second intermediate portion 24 connects the second end 14 with the first intermediate section 22 and has a constant thickness measured perpendicularly to the front and rear faces 11,12; in addition, at the second intermediate portion 24, the front and rear faces 11,12 of the flat band 10 are at least partly curved and have matching curvature so as to remain always parallel to each other and so that the second intermediate section 24 at least partly and substantially continuously defines a curve 25 (Figures 2 and 3) in/along the light guide 7, so that the first end 13 and the first intermediate section 22 are aligned with each other and both are arranged at an angle to the second end 14, with which they substantially connect continuously through the second intermediate section 24.

The second intermediate section 24, whether forming the curve 25 or not, is preferably provided, at least in part, with a plurality of grooves or scratches or ribs 26 formed on one or both of the front and rear faces 11,12 (in the preferred embodiment illustrated only on the rear face 12) and oriented perpendicularly to the upper and lower longitudinal edges 16,18 of the light guide 7.

The grooves or scratches or ribs 26 are straight and preferably have a cylindrical profile.

These cylindrical optics 26 and the change of cross section in the first intermediate section 22 obtained by means of the converging faces 11,12 serve to better "mix" the light directed along the light guide 7. Without these additional elements, intense but poorly controlled light beams could be obtained, particularly under specific conditions, such as LEDs 3 arranged far apart.

In the presence of the curve 25 on the light guide 7, the grooves or scratches or ribs 26 are, preferably, only formed on the side of said first intermediate section 22, upstream of a curved portion 27 of the second intermediate section 24. This curved portion 27 defines the above-mentioned curve 25 of the flat band 10, located on the side of the first intermediate section 22.

Here, above, and hereinafter, the terms "upstream" and "downstream" are intended to refer, as already indicated, to the linear propagation direction F of the light beams 8 within the light guide 7 to form, at the exit thereof, the light beam 9 with a pre-set photometric profile.

In the non-limiting example illustrated in Figures 3 and 5, the at least one second collimating element 20 is made at a single edge 30 of the transverse through opening 21 arranged on the side of the first end 13.

In this embodiment, in Figures 3 and 5, the at least one second collimating element 20 (the pair of collimating element 20 arranged side-by-side in a direction perpendicular to the edges 16,18) faces the second end 14 and is therefore formed on the edge 30 arranged on the side of the edge 15.

In the non-limiting embodiment illustrated in Figure 2, on the other hand, the collimating elements 20 are always formed on the edge 30 facing the interior of the through opening 21, while the opposite edge 31 is provided with an optical mixer 32, for example consisting of cylindrical lenses or scratches of the type of the elements 26, having the purpose of increasing the mixing and homogeneity of the collimated light moving within the light guide 7. The optical mixer 32 is, therefore, a preferred but optional element, which may be missing, as in the embodiments of Figures 3 and 5.

In either of the described embodiments, the collimating elements 20 may consist of concave or convex lenses, or other suitable optical devices, for example Fresnels or holograms.

The through opening 21 is an important aspect of the invention, as it enables the production of the second collimating elements 20 in a simple and economical way and with reduced overall dimensions, and in the most suitable position in order to obtain the desired emission homogeneity in the light beam 9.

The at least first and second collimating element 19,20 are configured to also determine, at least in part, an aesthetic appearance of an emission section 28 (Figure 2) of the second light beam 9, which, according to the invention, is arranged on the front face 11 of the flat band 10 constituting the light guide 7, i.e. is represented by a pre-set portion of the face 11.

Indeed, the second end 14 of the light guide 7 is provided, on the side of the rear face 12 of the flat band 10, with light extracting elements 29 configured to deflect the second light beam 9 through the emission section 28 of the front face 11 in the direction D, which is substantially perpendicular to the faces 11 and 12.

The light emitted by the LEDs 3, propagating within the light guide 7, due to the light conformation and distribution received via the collimating elements 19 and 20, propagates along the light guide 7 with total reflection and with a series of refractions and rebounds caused first by the intermediate section 22 with progressively smaller thickness, measured perpendicularly to the faces 11,12, i.e., perpendicularly to the emission section 28 (i.e., parallel to the direction D), then by the obstacles consisting of the grooves/scratches or ribs 26 and, finally, by the curve 25, finally reaching the end 14 of the light guide 7.

This second end 14 of the light guide 7 delimits, on the side of the front face 11, the emission section 28 of the light guide 7 configured to emit the second light beam 9 with a pre-set photometric profile and a pre-set aesthetic appearance in the direction D.

For this purpose, the second end 14 of the light guide 7 is provided, on the side of its rear face 12, with the light extracting elements 29, in the illustrated, non-limiting example consisting of an array of prisms, configured to deflect the second light beam 9, which is now conformed and made uniform according to the desired photometric profile thanks to the lenses or collimating elements 19 and 20 and to the rebounds caused by the intermediate section 22, by the ribs 26, and by the curve 25 (and by the optical mixer 32 when present), through the emission section 28 of the front face 11 and, from this, through the transparent element 4 in the direction D, forming, for example, a dipped beam or anti-fog beam.

The collimation is performed so as to illuminate the curtain visible through the clear lens or transparent element 4 and consisting of the end 14 of the light guide 7 formed by the flat band 10 for its entire height, between the edges 16 and 18.

The input light produced by the LEDs 3 has a Lambertian distribution, while, thanks to the described configuration and especially thanks to the functional pairing of the collimating elements 19 and 20 arranged in tandem along the direction F, the output light (beam 9 directed in the direction D - Figure 1) is uniform. The output light defined by the light beam 9 is also homogeneous from several angles so that the shape or aesthetic appearance of the emission section 28 is also substantially the same even if the end 14 is observed from different angles, for example from the front or from the side.

The lenses 19 and 20 work together and enable collimation and homogeneity in confined spaces.

Another advantage of the described solution is that the LEDs 3 can be arranged side by side at a greater distance from each other than in the usual configurations adopted for known light guides.

The solution described therefore proposes to create a so-called "curtain" optical system using a reduced number of LEDs, but with high efficiency.

The high number of LEDs commonly used in known solutions makes it possible to have a function (typically only signalling) that is homogeneous when lit, in particular if collimators are used that increase efficiency. However, the necessary spacing for the LEDs remains close (e.g. 6.5 mm in slide 7), otherwise "spots" are formed that compromise the lit aspect of the function.

On the contrary, the use of two collimators in tandem according to the invention (working together) makes it possible to have large spacing (for example of 25 mm), because it generates light beams that are homogeneous (fewer aesthetic defects) and collimated (more efficiency). This makes it possible to obtain considerable construction savings and reduced LED heat generation in use - heat that must normally be disposed of through heatsinks, which are particularly bulky elements if the LEDs generate a lot of heat.

The change of section and the cylindrical optics are elements that improve the bright aesthetic appearance in the side views.

All the purposes of the invention are achieved.

## Claims

1. A lighting device (1) for a vehicle, in particular a headlight for a motor-vehicle, comprising a cup-shaped housing (2) that houses at least one light source, a transparent element (4) arranged to close a front opening (5) of the cup-shaped housing (2) and an optical system (6) also housed within the cup-shaped housing and configured to pick up at least one first light beam (8) generated by said light source and project, in a pre-set direction (D), a second light beam (9) having a pre-set photometric profile, wherein the light source consists of at least one LED (3) or one LED battery (3), wherein the optical system (6) comprises a light guide (7) constituted by a flat band (10) delimited between a front face (11) and a rear face (12) thereof, which are substantially flat, and having a first (13) and a second (14) end, opposite to one another, the first end (13) being configured to pick up said at least one first light beam (8) generated by said at least one LED (3) or LED battery, and where the first end (13) of the light guide is provided, on the side opposite the second end (14), with a transverse edge (15) shaped so as to define at least one first collimating element (19), for example a concave or convex lens, arranged facing said at least one LED (3) or LED battery and configured to collect within the light guide (7) said at least one first light beam (8) and to make a first collimation thereof towards the second end (14) of the light guide; and wherein said front face (11) of the flat band (10) constituting the light guide comprises an emission section (28) of said second light beam (9) formed on the front face (11) itself, the second end (14) of the light guide (7) being provided, on the side of the rear face (12) of the flat band (10), with light extracting elements (29) configured to deflect the second light beam (9) through the emission section (28) of the front face so that the second light beam (9) has an emission direction substantially perpendicular to the front face (11);
**characterised in that,** in combination,
i)- the first end (13) of the light guide is provided towards the second end (14) and on the side opposite said transverse edge (15), with at least one second collimating element (20) facing to, and operatively associated with, said at least one first collimating element (19) and configured to collect the first light beam after the first collimation and to make a second collimation of the first light beam, generating downstream of the at least one second collimating element and towards the second end, said second light beam (9) with a pre-set photometric profile already inside the light guide and uniformly over the entire height of the flat band (10) constituting the same and measured between an upper longitudinal edge (16) and a lower longitudinal edge (18) of the flat band, perpendicularly to these;
ii)- the second collimating element (20) is oriented parallel to said front and rear faces (11,12) and perpendicularly to the upper and lower longitudinal edges (16,18);
iii)- said light guide (7) has, between said first and second ends (13,14), a first intermediate section (22) arranged downstream of the second collimating element (20) with respect to a trajectory of said at least one first light beam (8) and delimited between two opposite convergent portions (23) of said front and rear faces (11,12) so that the first intermediate section (22) has a thickness, measured perpendicularly to said first and second faces (11,12), progressively reducing towards the second end (14), but a constant height measured perpendicularly to said upper and lower longitudinal edges (16,18), the light guide (7) extending, downstream of the first intermediate section (22) and towards the second end (14), with a cross-section having a constant thickness measured perpendicularly to said front and rear faces.

2. The lighting device according to claim 1, **characterised in that** said opposite convergent portions (23) of said front and rear faces (11,12) delimiting the first intermediate section (22) are connected with continuity to the rest of said front and rear faces (11,12) and have a continuous, rectilinear, or curved profile.

3. The lighting device according to claim 1 or 2, **characterised in that** said light guide (7) comprises a second intermediate section (24), arranged downstream of the first intermediate section (22) with respect to the trajectory of said at least one first light beam (8) and on the side of said second end (14), connecting the second end (14) with the first intermediate section (22); the second intermediate section (24) having a constant thickness measured perpendicularly to said front and rear faces and, in correspondence to it, said front and rear faces (11,12) being, at least partially, curved and with matching curves so that the second intermediate section defines, at least partially and substantially with continuity, a curve (25) in said flat band (10) constituting the light guide (7), so that the first end (13) with the first intermediate section (22) are aligned to each other and arranged at an angle with respect to said second end (14), to which they are connected with continuity through the second intermediate section (24) .

4. The lighting device according to claim 3, **characterised in that** the second intermediate section (24) is provided at least partially with a plurality of grooves or scratches or ribs (26) made on one or both of the front and rear faces and oriented perpendicularly to said upper and lower longitudinal edges (16,18) of the flat band (10) constituting the light guide.

5. The lighting device according to claim 4, **characterised in that** said grooves or scratches or ribs (26) are rectilinear.

6. The lighting device according to claim 4 or 5, **characterised in that** said grooves or scratches or ribs (26) have a cylindrical profile.

7. The lighting device according to one of the claims from 4 to 6, **characterised in that** said grooves or scratches or ribs (26) are made only upstream of said first intermediate section (22), upstream of a curved portion (27) of the second intermediate section (24), defining said curve (25) in said flat band (10).

8. The lighting device according to one of the preceding claims, **characterised in that** said at least one second collimating element (20) is made in correspondence with a transverse through opening (21), formed perpendicularly to the front and rear faces (11,12) through the flat band (10) constituting the light guide (7); said at least one second collimating element (20) being defined by one or both of opposite transverse edges (30,31) of said through opening (21) that extend between said upper and lower longitudinal edges (16,18) of the flat band (10).

9. The lighting device according to one of the preceding claims, **characterised in that** said at least one second collimating element (20) faces towards the second end (14).

10. The lighting device according to any one of the preceding claims, **characterised in that** said first and second collimating elements (19,20) are configured to determine also, at least partially, an aesthetic appearance of an emission section (28) of said second light beam (9) on said front face (11) of the flat band (10) constituting the light guide.

11. A vehicle comprising a lighting device (1), headlight or lamp, according to any one of the preceding claims.

## Patentansprüche

1. Beleuchtungsvorrichtung (1) für ein Fahrzeug, insbesondere ein Scheinwerfer für ein Kraftfahrzeug, umfassend ein schalenförmiges Gehäuse (2), in dem wenigstens eine Lichtquelle untergebracht ist, ein transparentes Element (4), das so angeordnet ist, dass es eine vordere Öffnung (5) des schalenförmigen Gehäuses (2) verschließt, und ein optisches System (6), das ebenfalls in dem schalenförmigen Gehäuse untergebracht ist und dazu konfiguriert ist, wenigstens einen ersten Lichtstrahl (8), der von der Lichtquelle erzeugt wird, aufzunehmen und einen zweiten Lichtstrahl (9) mit einem voreingestellten photometrischen Profil in einer voreingestellten Richtung (D) zu projizieren, wobei die Lichtquelle wenigstens eine LED (3) oder einer LED-Batterie (3) aufweist, wobei das optische System (6) einen Lichtleiter (7) umfasst, der von einem flachen Band (10) gebildet wird, das zwischen einer vorderen Fläche (11) und einer hinteren Fläche (12) desselben, die im Wesentlichen flach sind, begrenzt ist und ein erstes (13) und ein zweites (14) Ende aufweist, die einander gegenüberliegen, wobei das erste Ende (13) dazu konfiguriert ist, den wenigstens einen ersten Lichtstrahl (8) aufzunehmen, der von der wenigstens einen LED (3) oder LED-Batterie erzeugt wird, und wobei das erste Ende (13) des Lichtleiters auf der dem zweiten Ende (14) gegenüberliegenden Seite mit einer Querkante (15) versehen ist, die so geformt ist, dass sie wenigstens ein erstes Kollimationselement (19) wie beispielsweise eine konkave oder konvexe Linse definiert, das der wenigstens einen LED (3) oder LED-Batterie zugewandt ist und dazu konfiguriert ist, den wenigstens einen ersten Lichtstrahl (8) innerhalb des Lichtleiters (7) zu sammeln und eine erste Kollimation desselben in Richtung zu dem zweiten Ende (14) des Lichtleiters zu bewirken; und wobei die vordere Fläche (11) des flachen Bandes (10), das den Lichtleiter bildet, einen Emissionsabschnitt (28) für den zweiten Lichtstrahl (9) umfasst, der auf der vorderen Fläche (11) selbst ausgebildet ist, wobei das zweite Ende (14) des Lichtleiters (7) auf der Seite der hinteren Fläche (12) des flachen Bandes (10) mit lichtextrahierenden Elementen (29) versehen ist, die dazu konfiguriert sind, den zweiten Lichtstrahl (9) durch den Emissionsabschnitt (28) der vorderen Fläche zu lenken, so dass der zweite Lichtstrahl (9) eine Emissionsrichtung aufweist, die im Wesentlichen senkrecht zu der vorderen Fläche (11) ist;
**dadurch gekennzeichnet, dass** in Kombination,
i)- das erste Ende (13) des Lichtleiters in Richtung zu dem zweiten Ende (14) und auf der der Querkante (15) gegenüberliegenden Seite mit wenigstens einem zweiten Kollimationselement (20) versehen ist, das dem wenigstens einen ersten Kollimationselement (19) zugewandt ist und diesem funktionell zugeordnet ist und dazu konfiguriert ist, den ersten Lichtstrahl nach der ersten Kollimation zu sammeln und eine zweite Kollimation des ersten Lichtstrahls vorzunehmen, wobei der zweite Lichtstrahl (9) stromabwärts des wenigstens einen zweiten Kollimationselements und in Richtung zu dem zweiten Ende erzeugt wird mit einem voreingestellten photometrischen Profil bereits innerhalb des Lichtleiters und gleichmäßig über die gesamte Höhe des flachen Bandes (10), das dieses bildet und zwischen einer oberen Längskante (16) und einer unteren Längskante (18) des flachen Bandes senkrecht zu diesen gemessen wird;
ii)- das zweite Kollimationselement (20) parallel zu der vorderen und der hinteren Fläche (11, 12) und senkrecht zu der oberen und der unteren Längskante (16, 18) ausgerichtet ist;
iii)- der Lichtleiter (7) zwischen dem ersten und dem zweiten Ende (13, 14) einen ersten Zwischenabschnitt (22) aufweist, der stromabwärts des zweiten Kollimationselements (20) in Bezug auf einen Laufweg des wenigstens einen ersten Lichtstrahls (8) angeordnet ist und zwischen zwei gegenüberliegenden konvergierenden Abschnitten (23) der vorderen und der hinteren Fläche (11, 12) begrenzt ist, so dass der erste Zwischenabschnitt (22) eine Dicke aufweist, senkrecht zu der ersten und der zweiten Fläche (11, 12) gemessen, die zum zweiten Ende (14) hin allmählich abnimmt, aber eine konstante Höhe senkrecht zu der oberen und der unteren Längskante (16, 18) aufweist, wobei sich der Lichtleiter (7) stromabwärts des ersten Zwischenabschnitts (22) und in Richtung zu dem zweiten Ende (14) hin mit einem Querschnitt erstreckt, der eine konstante Dicke senkrecht zu der vorderen und der hinteren Fläche hat.

2. Beleuchtungsvorrichtung nach Anspruch 1, **dadurch gekennzeichnet, dass** die gegenüberliegenden konvergierenden Abschnitte (23) der vorderen und der hinteren Fläche (11, 12), die den ersten Zwischenabschnitt (22) begrenzen, durchgehend mit dem Rest der vorderen und der hinteren Fläche (11, 12) verbunden sind und ein durchgehendes, geradliniges oder gebogenes Profil aufweisen.

3. Beleuchtungsvorrichtung nach Anspruch 1 oder 2, **dadurch gekennzeichnet, dass** der Lichtleiter (7) einen zweiten Zwischenabschnitt (24) umfasst, der in Bezug auf den Laufweg des wenigstens einen ersten Lichtstrahls (8) stromabwärts des ersten Zwischenabschnitts (22) und auf der Seite des zweiten Endes (14) angeordnet ist und das zweite Ende (14) mit dem ersten Zwischenabschnitt (22) verbindet; der zweite Zwischenabschnitt (24) eine konstante Dicke aufweist, die senkrecht zu der vorderen und der hinteren Fläche gemessen wird, und entsprechend die vordere und die hinteren Fläche (11, 12) zumindest teilweise gekrümmt und mit passenden Kurven versehen sind, so dass der zweite Zwischenabschnitt zumindest teilweise und im Wesentlichen mit Kontinuität eine Kurve (25) in dem flachen Band (10), das den Lichtleiter (7) bildet, definiert, so dass das erste Ende (13) mit dem ersten Zwischenabschnitt (22) zueinander ausgerichtet und in einem Winkel in Bezug auf das zweite Ende (14) angeordnet sind, mit dem sie durch den zweiten Zwischenabschnitt (24) durchgehend verbunden sind.

4. Beleuchtungsvorrichtung nach Anspruch 3, **dadurch gekennzeichnet, dass** der zweite Zwischenabschnitt (24) zumindest teilweise mit einer Vielzahl von Rillen oder Riefen oder Rippen (26) versehen ist, die auf einer oder beiden der vorderen und der hinteren Fläche ausgebildet und senkrecht zu der oberen und der unteren Längskante (16, 18) des flachen Bandes (10), das den Lichtleiter bildet, ausgerichtet sind.

5. Beleuchtungsvorrichtung nach Anspruch 4, **dadurch gekennzeichnet, dass** die Rillen oder Riefen oder Rippen (26) geradlinig sind.

6. Beleuchtungsvorrichtung nach Anspruch 4 oder 5, **dadurch gekennzeichnet, dass** die Rillen oder Riefen oder Rippen (26) ein zylindrisches Profil aufweisen.

7. Beleuchtungsvorrichtung nach einem der Ansprüche 4 bis 6, **dadurch gekennzeichnet, dass** die Rillen oder Riefen oder Rippen (26) nur stromaufwärts des ersten Zwischenabschnitts (22), stromaufwärts eines gekrümmten Teils (27) des zweiten Zwischenabschnitts (24), der die Kurve (25) in dem flachen Band (10) definiert, ausgebildet sind.

8. Beleuchtungsvorrichtung nach einem der vorangehenden Ansprüche, **dadurch gekennzeichnet, dass** das wenigstens eine zweite Kollimationselement (20) in Übereinstimmung mit einer quer verlaufenden Durchgangsöffnung (21) ausgebildet ist, die senkrecht zu der vorderen und der hinteren Fläche (11, 12) durch das flache Band (10), das den Lichtleiter (7) bildet, ausgebildet ist; wobei das wenigstens eine zweite Kollimationselement (20) durch eine oder beide der gegenüberliegenden Querkanten (30, 31) der Durchgangsöffnung (21) definiert ist, die sich zwischen der oberen und der unteren Längskante (16, 18) des flachen Bandes (10) erstrecken.

9. Beleuchtungsvorrichtung nach einem der vorangehenden Ansprüche, **dadurch gekennzeichnet, dass** das wenigstens eine zweite Kollimationselement (20) dem zweiten Ende (14) zugewandt ist.

10. Beleuchtungsvorrichtung nach einem der vorangehenden Ansprüche, **dadurch gekennzeichnet, dass** das erste und das zweite Kollimationselement (19, 20) dazu konfiguriert sind, auch zumindest teilweise ein ästhetisches Erscheinungsbild eines Emissionsabschnitts (28) des zweiten Lichtstrahls (9) auf der vorderen Fläche (11) des flachen Bandes (10), das den Lichtleiter bildet, zu bestimmen.

11. Fahrzeug, das eine Beleuchtungseinrichtung (1), wie einen Scheinwerfer oder eine Lampe, nach einem der vorangehenden Ansprüche umfasst.

## Revendications

1. Dispositif d'éclairage (1) pour un véhicule, en particulier un phare pour un véhicule à moteur, comprenant un boîtier en forme de coupelle (2) qui héberge au moins une source de lumière, un élément transparent (4) agencé pour fermer une ouverture avant (5) du boîtier en forme de coupelle (2) et un système optique (6) également hébergé à l'intérieur du boîtier en forme de coupelle et configuré pour capter au moins un premier faisceau de lumière (8) généré par ladite source de lumière et projeter, dans une direction préétablie (D), un deuxième faisceau de lumière (9) ayant un profil photométrique préétabli, dans lequel la source de lumière est constituée d'au moins une DEL (3) ou d'une batterie de DEL (3), dans lequel le système optique (6) comprend un guide de lumière (7) constitué par une bande plate (10) délimitée entre une face avant (11) et une face arrière (12) de celle-ci, qui sont sensiblement plates, et ayant une première (13) et une deuxième (14) extrémité, opposées l'une à l'autre, la première extrémité (13) étant configurée pour capter ledit au moins un premier faisceau de lumière (8) généré par ladite au moins une DEL (3) ou batterie de DEL, et où la première extrémité (13) du guide de lumière est dotée, sur le côté opposé à la deuxième extrémité (14), d'un bord transversal (15) façonné de façon à définir au moins un premier élément de collimation (19), par exemple une lentille concave ou convexe, agencé en face de ladite au moins une DEL (3) ou batterie de DEL et configuré pour collecter à l'intérieur du guide de lumière (7) ledit au moins un premier faisceau de lumière (8) et pour réaliser une première collimation de celui-ci vers la deuxième extrémité (14) du guide de lumière ; et dans lequel ladite face avant (11) de la bande plate (10) constituant le guide de lumière comprend une section d'émission (28) dudit deuxième faisceau de lumière (9) formée sur la face avant (11) elle-même, la deuxième extrémité (14) du guide de lumière (7) étant dotée, sur le côté de la face arrière (12) de la bande plate (10), d'éléments d'extraction de lumière (29) configurés pour dévier le deuxième faisceau de lumière (9) à travers la section d'émission (28) de la face avant de sorte que le deuxième faisceau de lumière (9) possède une direction d'émission sensiblement perpendiculaire à la face avant (11) ;
**caractérisé en ce que**, en combinaison,
i)- la première extrémité (13) du guide de lumière est dotée, vers la deuxième extrémité (14) et sur le côté opposé audit bord transversal (15), d'au moins un deuxième élément de collimation (20) faisant face, et associé de manière fonctionnelle, audit au moins un premier élément de collimation (19) et configuré pour collecter le premier faisceau de lumière après la première collimation et pour réaliser une deuxième collimation du premier faisceau de lumière, en générant en aval de l'au moins un deuxième élément de collimation et vers la deuxième extrémité, ledit deuxième faisceau de lumière (9) avec un profil photométrique préétabli déjà à l'intérieur du guide de lumière et uniformément sur la totalité de la hauteur de la bande plate (10) constituant celui-ci et mesuré entre un bord longitudinal supérieur (16) et un bord longitudinal inférieur (18) de la bande plate, perpendiculairement à ceux-ci ;
ii)- le deuxième élément de collimation (20) est orienté parallèlement auxdites faces avant et arrière (11, 12) et perpendiculairement aux bords longitudinaux supérieur et inférieur (16, 18) ;
iii)- ledit guide de lumière (7) possède, entre lesdites première et deuxième extrémités (13, 14), une première section intermédiaire (22) agencée en aval du deuxième élément de collimation (20) par rapport à une trajectoire dudit au moins un premier faisceau de lumière (8) et délimitée entre deux parties convergentes opposées (23) desdites faces avant et arrière (11, 12) de sorte que la première section intermédiaire (22) possède une épaisseur, mesurée perpendiculairement auxdites première et deuxième faces (11, 12), se réduisant progressivement vers la deuxième extrémité (14), mais une hauteur constante mesurée perpendiculairement auxdits bords longitudinaux supérieur et inférieur (16, 18), le guide de lumière (7) s'étendant, en aval de la première section intermédiaire (22) et vers la deuxième extrémité (14), avec une section transversale ayant une épaisseur constante mesurée perpendiculairement auxdites faces avant et arrière.

2. Dispositif d'éclairage selon la revendication 1, **caractérisé en ce que** lesdites parties convergentes opposées (23) desdites faces avant et arrière (11, 12) délimitant la première section intermédiaire (22) sont reliées en continuité au reste desdites faces avant et arrière (11, 12) et possèdent un profil continu, rectiligne ou incurvé.

3. Dispositif d'éclairage selon la revendication 1 ou 2, **caractérisé en ce que** ledit guide de lumière (7) comprend une deuxième section intermédiaire (24), agencée en aval de la première section intermédiaire (22) par rapport à la trajectoire dudit au moins un premier faisceau de lumière (8) et sur le côté de ladite deuxième extrémité (14), reliant la deuxième extrémité (14) à la première section intermédiaire (22) ; la deuxième section intermédiaire (24) ayant une épaisseur constante mesurée perpendiculairement auxdites faces avant et arrière et, en correspondance de celles-ci, lesdites faces avant et arrière (11, 12) étant, au moins partiellement, incurvées et dotées de courbes concordantes de sorte que la deuxième section intermédiaire définisse, au moins partiellement et sensiblement en continuité, une courbe (25) dans ladite bande plate (10) constituant le guide de lumière (7), de sorte que la première extrémité (13) avec la première section intermédiaire (22) soient alignées l'une par rapport à l'autre et agencées selon un angle par rapport à ladite deuxième extrémité (14), à laquelle elles sont reliés en continuité par le biais de la deuxième section intermédiaire (24).

4. Dispositif d'éclairage selon la revendication 3, **caractérisé en ce que** la deuxième section intermédiaire (24) est dotée au moins partiellement d'une pluralité de rainures ou de rayures ou de nervures (26) réalisées sur l'une ou les deux parmi les faces avant et arrière et orientées perpendiculairement auxdits bords longitudinaux supérieur et inférieur (16, 18) de la bande plate (10) constituant le guide de lumière.

5. Dispositif d'éclairage selon la revendication 4, **caractérisé en ce que** lesdites rainures ou rayures ou nervures (26) sont rectilignes.

6. Dispositif d'éclairage selon la revendication 4 ou 5, **caractérisé en ce que** lesdites rainures ou rayures ou nervures (26) possèdent un profil cylindrique.

7. Dispositif d'éclairage selon l'une des revendications 4 à 6, **caractérisé en ce que** lesdites rainures ou rayures ou nervures (26) sont réalisées uniquement en amont de ladite première section intermédiaire (22), en amont d'une partie incurvée (27) de la deuxième section intermédiaire (24), définissant ladite courbe (25) dans ladite bande plate (10).

8. Dispositif d'éclairage selon l'une des revendications précédentes, **caractérisé en ce que** ledit au moins un deuxième élément de collimation (20) est réalisé en correspondance d'une ouverture traversante (21) transversale, formée perpendiculairement aux faces avant et arrière (11, 12) à travers la bande plate (10) constituant le guide de lumière (7) ; ledit au moins un deuxième élément de collimation (20) étant défini par l'un ou les deux parmi des bords transversaux opposés (30, 31) de ladite ouverture traversante (21) qui s'étendent entre lesdits bords longitudinaux supérieur et inférieur (16, 18) de la bande plate (10).

9. Dispositif d'éclairage selon l'une des revendications précédentes, **caractérisé en ce que** ledit au moins un deuxième élément de collimation (20) fait face à la deuxième extrémité (14).

10. Dispositif d'éclairage selon l'une quelconque des revendications précédentes, **caractérisé en ce que** lesdits premier et deuxième éléments de collimation (19, 20) sont configurés pour déterminer également, au moins partiellement, une apparence esthétique d'une section d'émission (28) dudit deuxième faisceau de lumière (9) sur ladite face avant (11) de la bande plate (10) constituant le guide de lumière.

11. Véhicule comprenant un dispositif d'éclairage (1), un phare ou un feu, selon l'une quelconque des revendications précédentes.
